# EUROPÄISCHE PATENTSCHRIFT

(11) **EP 1 987 972 B1**
(45) Veröffentlichungstag und Bekanntmachung des Hinweises auf die Patenterteilung: **25.04.2012**
(21) Anmeldenummer: 08008140.9
(22) Anmeldetag: 28.04.2008
(51) Int. Cl.: B60H 1/00

(54) **Verfahren zur automatischen Lüftersteuerung in einem Kraftfahrzeug bei erkannter Tunnelfahrt**
Method for automatically controlling ventilation in a motor vehicle when recognised to be travelling in a tunnel
Procédé de commande automatique de ventilateurs dans un véhicule automobile en cas de passage de tunnel détecté

(30) Priorität: 04.05.2007 DE 102007021020
(43) Veröffentlichungstag der Anmeldung: 05.11.2008
(73) Patentinhaber: Bayerische Motoren Werke Aktiengesellschaft, 80809 München (DE)
(72) Erfinder: Baur, Richard, 85276 Pfaffenhofen (DE); Kiesewetter, Michael, 80687 München (DE)

(56) Entgegenhaltungen:
- DE-A1- 19 740 562
- DE-A1-102004 004 191
- DE-C1- 19 942 286
- FR-A- 2 780 349

## Beschreibung

Die Erfindung bezieht sich auf ein Verfahren zur automatischen Klimaanlagensteuerung in einem Kraftfahrzeug zur Vermeidung von Feuchtigkeitsbeschlag auf den Frontscheiben des Kraftfahrzeugs.

Automatische Klimaanlagenansteuerungen sind bereits seit langem bekannt. Diese werden eingesetzt, um dem Nutzer ein optimales Innenraumklima ohne dauernde Nachjustierung zu bieten. Insbesondere soll die automatische Klimaanlagenansteuerung einen optimalen Betrieb der Klimaanlage bei bestimmten Gefahr -und Umgebungssituationen gewährleisten.

Eine derartige Klimaanlagensteuerung ist aus dem nächstliegenden Stand der technik, Document FR 2 780 349, bekannt.

So geht beim Befahren eines Tunnels eine nicht unerhebliche Gefahr von plötzlich beschlagenen Frontscheiben aus. Dieses Gefahrenpotential ist so relevant, dass der österreichische Automobil Club vor dieser Gefahr warnt und Tipps veröffentlicht hat, wie sich der Fahrer in solchen Situationen zu verhalten hat.

Um dieses Problem zu umgehen, offenbart die DE 103 20 744 B3 eine Vorrichtung und ein Verfahren zur Klimaregelung, wobei bei einem erfassten kritischen Wetter und einer erfassten Tunneleinfahrt die Fahrzeugscheiben sowie die Außenspiegelflächen für einen vorbestimmten Zeitraum geheizt werden und/oder die Scheibenwischer betätigt werden.

Weiter offenbart die DE 10 2004 004 191 A1 ein Kraftfahrzeug mit einem Sensor zum Erkennen der Einfahrt in einen Tunnel. Zur Verbesserung des Fahrkomforts werden bei einer erkannten Einfahrt in einen Tunnel die Umluftklappen geschlossen. Durch das selbsttätige Schließen der Umluftklappen soll eine Geruchsbelästigung der Insassen im Kraftfahrzeug vermieden werden. Um das Ansaugen von Feuchtigkeit in die Belüftungsanlage zu vermeiden, ist zusätzlich ein Regensensor vorgesehen, der beispielsweise nach einem optischen und/oder elektrischen Messprinzip Regen registriert. Sobald von diesem Sensor ein entsprechendes Signal ausgesendet wird, werden die Umluftklappen ebenfalls geschlossen.

Aufgabe der Erfindung ist es, ein alternatives Verfahren zur automatischen Steuerung einer Klimaanlage in einem Kraftfahrzeug zur Vermeidung von Feuchtigkeitsbeschlag auf den Frontscheiben des Kraftfahrzeugs anzugeben, welches einfach und kostengünstig realisiert werden kann.

Diese Aufgabe wird durch ein Verfahren nach Patentanspruch 1 gelöst. Vorteilhafte Weiterbildungen ergeben sich aus den abhängigen Ansprüchen.

Der Erfindung liegt die Erkenntnis zugrunde, dass ein Beschlag der Frontscheiben durch eine entsprechend temperierte Luftströmung zu den Frontscheiben vermieden oder zumindest reduziert werden kann.

Somit zeichnet sich das erfindungsgemäße Verfahren zur automatischen Klimaanlagensteuerung in einem Kraftfahrzeug zur Vermeidung von Feuchtigkeitsbeschlag auf den Frontscheiben des Kraftfahrzeugs dadurch aus, dass bei erkannter Tunneleinfahrt die Gebläseleistung eines Lüfters automatisch auf eine vorgegebene Leistungsstufe erhöht wird und/oder die Luft-Ausblastemperatur des Lüfters automatisch derart verändert wird, dass ein Beschlagen der Scheiben verhindert oder zumindest reduziert wird. Zusätzlich werden vorgegebene Lüftungsklappen zur Luftführung an die Frontscheiben derart angesteuert, dass der Luftstrom in Richtung der Frontscheiben geleitet wird.

Dadurch kann durch einfachste Realisierung weitestgehend sichergestellt werden, dass der Fahrkomfort für die Insassen des Kraftfahrzeugs während der Tunnelfahrt nicht durch beschlagene Scheiben beeinträchtigt wird. Durch die Vermeidung von Beschlag auf den Frontscheiben ist somit ein Sicherheitsgewinn zu erwarten. Eine Erhöhung der Gebläseleistung, eine automatische Temperierung der Ausblastemperatur und ein Ablenken des Gebläsestroms durch eine Ansteuerung entsprechende Klappen im Fahrzeug, insbesondere durch die im oberen Bereich des Fahrzeugs angeordneten Lüftungsklappen ist einfach zu realisieren, da diese Funktionen in Fahrzeugen mit Klimaanlagen bereits ohnehin realisiert sind. Somit sind keine zusätzlichen Komponenten zur Durchführung des erfindungsgemäßen Verfahrens notwendig.

Vorteilhafterweise kann die Gebläseleistung des Lüfters bereits zu einem vorgegebenen Zeitpunkt oder zu einer vorgegebenen Distanz von der Tunneleinfahrt erhöht werden. Analog dazu kann zusätzlich oder alternativ auch die Ausblastemperatur bereits zu einem vorgegebenen Zeitpunkt oder zu einer vorgegebenen Distanz vor der Tunneleinfahrt derart verändert werden, dass ein Beschlagen der Frontscheiben verhindert oder reduziert wird. Auch die Lüftungsklappen können bereits zu einem vorgegebenen Zeitpunkt oder zu einer vorgegebenen Distanz vor der Tunneleinfahrt derart angesteuert werden, dass der Luftstrom in Richtung der Fronscheiben geleitet wird. Hierzu sind solche Sensoren zum Erkennen einer Tunneleinfahrt notwendig, die bereits eine bestimmte Zeit und/oder eine bestimmte Distanz vor dem Tunnel die Tunneleinfahrt erkennen. Derartige Sensoren sind bspw. optische und/oder akustische Sensoren wie Radarsensoren und Infrarotsensoren, die derart am Fahrzeug angeordnet sind, dass sie einen bestimmte Distanz vor dem Fahrzeug die Straßenumgebung bzw. den Tunnel erfassen und erkennen können. Zu Verbesserung der Tunnelerkennung können zusätzlich noch Sensoren einer Navigationseinheit zur Positionsbestimmung des Kraftfahrzeugs verwendet werden. Es wäre aber auch denkbar, nur diese Sensoren der Navigationseinheit zum Erkennen einer zukünftigen oder aktuellen Tunneleinfahrt zu verwenden.

Soll die entsprechende Ansteuerung erst bei der Einfahrt in den Tunnel vorgenommen werden, können ggf. auch sog. Solarsensoren verwendet werden, welche aktuelle Lichtverhältnisse detektieren, und eine Tunneleinfahrt aufgrund einer plötzlichen Veränderung der Lichtverhältnisse erkennen können.

Das erfindungsgemäße Verfahren kann dadurch noch weiter verbessert werden, dass in einer vorteilhaften Ausgestaltung die oben beschriebene automatische Klimaanlagensteuerung in Abhängigkeit von erfassten Wetterdaten, insbesondere vom Regen, der Außentemperatur, dem Sonnenstand vor der Tunneleinfahrt und anderen Daten, wie bspw. der Innentemperatur vorgenommen wird.

Die Daten können bspw. im Hinblick auf eine Feuchtigkeitsbeschlags-Wahrscheinlichkeit ausgewertet werden. Besteht nur eine sehr geringe oder gar keine Gefahr eines Feuchtigkeitsbeschlags der Fronscheiben, kann das Starten des erfindungsgemäßen Verfahrens zur Vermeidung von Feuchtigkeitsbeschlag auf den Frontscheiben unterbunden werden. Dadurch werden die Insassen nicht unnötig durch eine erhöhte Gebläseleistung des Lüfters oder eine Temperaturveränderung der Ausblasluft gestört.

Alternativ oder zusätzlich kann anhand der Daten auch vorgegeben werden, um wieviel bzw. auf welche Leistungsstufe die Gebläseleistung des Lüfters erhöht wird oder werden muss, damit kein Feuchtigkeitsbeschlag an den Scheiben auftritt. Ebenso können die Daten zur Ermittlung und Einstellung der optimalen Temperatur der Ausblasluft des Lüfters verwendet werden.

Zusätzlich kann auch ausgewertet werden, ob bei einem Fahrzeug, welches mit einem zu öffnenden Verdeck ausgestattet ist, das Verdeck zum Zeitpunkt der Tunneleinfahrt bzw. noch vor der Tunneleinfahrt geöffnet ist. Ist dies der Fall, ist ein Starten des erfindungsgemäßen Verfahrens zur Vermeidung von Feuchtigkeitsbeschlag auf den Frontscheiben ebenfalls nicht notwendig.

Vorteilhafterweise ist das erfindungsgemäße Verfahren derart weitergebildet, dass bei erkannter Tunnelausfahrt die Gebläseleistung des Lüfters und/oder die Einstellung der Ausblastemperatur des Lüfters und/oder die Einstellung der Lüftungsklappen wieder an die Einstellungen vor erkannter Tunneleinfahrt angepasst werden bzw. die genannten Klimafunktionen (wieder) auf Komfort geregelt werden.

Insgesamt bietet die Erfindung den Vorteil, dass das Verhindern des Beschlagens der Frontscheiben während einer Tunnelfahrt hiermit ohne großen Aufwand umsetzbar ist, da die notwendigen Sensoren und Ansteuerungen in den Fahrzeugen in der Regel bereits vorhanden sind. Es ist lediglich eine entsprechende Auswertung der Sensorsignale und eine Aktivierung der genannten Klimaanlagensteuerungen notwendig.

## Patentansprüche

1. Verfahren zur automatischen Klimaanlagensteuerung in einem Kraftfahrzeug, wobei mittels Sensoren eine Tunneleinfahrt erkannt wird, wobei zur Vermeidung von Feuchtigkeitsbeschtag auf den Frontscheiben des Kraftfahrzeugs bei erkannter Tunneleinfahrt die Gebläseleistung eines Lüfters automatisch auf eine vorgegebene Leistungsstufe erhöht wird und/oder die Ausblastemperatur des Lüfters automatisch derart verändert wird, dass ein Beschlagen der Scheiben verhindert oder zumindest reduziert wird, und wobei die Lüftungsklappen derart angesteuert werden, dass der Luftstrom in Richtung der Frontscheiben geleitet wird.

2. Verfahren nach Anspruch 1, **dadurch gekennzeichnet, dass** die Sensoren zur Erkennung der Tunneleinfahrt optische und/oder akustische Sensoren sind.

3. Verfahren nach einem der vorangegangenen Ansprüche, **dadurch gekennzeichnet, dass** die Sensoren zum Erkennen einer Tunneleinfahrt Radarsensoren und/oder Infrarotsensoren und/oder Solarsensoren sind.

4. Verfahren nach einem der vorangegangenen Ansprüche, **dadurch gekennzeichnet, dass** die automatische Steuerung der Gebläseleistung und/oder der Ausblastemperatur des Lüfters und/oder der Lüftungsklappen in Abhängigkeit von erfassten Wetterdaten und/oder sonstigen Daten vorgenommen wird.

5. Verfahren nach dem vorangegangenen Anspruch, **dadurch gekennzeichnet, dass** die automatische Steuerung die Daten im Hinblick auf eine Feuchtigkeitsbeschlags-Wahrscheinlichkeit auswertet und das Starten des Verfahrens gemäß den vorangegangenen Ansprüchen unterbindet wenn nur eine sehr geringe oder gar keine Gefahr eines Feuchtigkeitsbeschlags der Fronscheiben erkannt wird.

## Claims

1. A method for automatically controlling air conditioning systems in a motor vehicle, entry to a tunnel being recognised by means of sensors, wherein to avoid moisture condensation on the front windows of the motor vehicle when entry to a tunnel is recognised, the blower power of a fan is automatically increased to a predetermined power stage and/or the blowing temperature of the fan is automatically changed in such a way that condensation on the windows is prevented or at least reduced, and wherein the ventilation flaps are activated in such a way that the air flow is guided in the direction of the front windows.

2. A method according to claim 1, **characterised in that** the sensors for recognising entry into a tunnel are optical and/or acoustic sensors.

3. A method according to any one of the preceding claims, **characterised in that** the sensors for recognising entry into a tunnel are radar sensors and/or infrared sensors and/or solar sensors.

4. A method according to any one of the preceding claims, **characterised in that** the automatic control of the blower power and/or the blowing temperature of the fan and/or the air flaps is carried out depending on weather data detected and/or other data.

5. A method according to any one of the preceding claims, **characterised in that** the automatic control evaluates the data with regard to a probability of moisture condensation and prevents the starting of the method according to the preceding claims if only a very small risk, or none at all, of moisture condensation on the front windows is recognised.

## Revendications

1. Procédé de commande automatique d'une installation de climatisation d'un véhicule automobile,
selon lequel on détecte l'entrée dans un tunnel à l'aide de capteurs,
- pour éviter l'embuage des vitres avant du véhicule, en cas de détection de l'arrivée dans le tunnel, on augmente automatiquement la puissance de soufflage d'un ventilateur sur un niveau de puissance prédéfini et/ou on modifie automatiquement la température de soufflage du ventilateur de façon à éviter un dépôt de buée sur les vitres ou du moins pour le réduire, et
- on commande les volets de ventilation pour diriger la veine d'air vers les vitres avant.

2. Procédé selon la revendication 1,
**caractérisé en ce que**
les capteurs de détection de l'arrivée dans un tunnel sont des capteurs optiques et/ou acoustiques.

3. Procédé selon l'une des revendications précédentes,
**caractérisé en ce que**
les capteurs de détection de l'arrivée dans un tunnel sont des capteurs radars et/ou des capteurs infrarouges et/ou des capteurs solaires.

4. Procédé selon l'une des revendications précédentes,
**caractérisé en ce que**
la commande automatique de la puissance du ventilateur et/ou la température de soufflage du ventilateur et/ou des volets de ventilation se fait en fonction des données météorologiques saisies et/ou d'autres données.

5. Procédé selon l'une des revendications précédentes,
**caractérisé en ce que**
la commande automatique des données est exploitée en fonction de la probabilité d'un dépôt de buée et le démarrage du procédé est interdit selon les revendications précédentes si seulement il n'y a qu'un faible risque ou pas de risque de dépôt de buée sur les vitres avant.
